# DEMANDE DE BREVET EUROPEEN

(11) **EP 2 662 242 A1**
(43) Date de publication de la demande: **13.11.2013**
(21) Numéro de dépôt: 13165853.6
(22) Date de dépôt: 29.04.2013
(51) Int. Cl.: B60R 5/04

(54) **Système de recouvrement d un compartiment à bagages de véhicule automobile**

(30) Priorité: 10.05.2012 FR 1254279
(71) Demandeur: CENTRE D'ETUDE ET DE RECHERCHE POUR L'AUTOMOBILE (CERA), 51100 Reims (FR)
(72) Inventeur: Brillon, Eric, 51140 Treslon (FR)
(74) Mandataire: Sayettat, Julien Christian

(57) **Abrégé**

L'invention concerne un système (1) de recouvrement d'un compartiment à bagages de véhicule automobile présentant des embouts (8) pourvus d'un plot de montage (9) respectif, ledit plot saillant latéralement, ledit plot présentant une section verticale longitudinale s'inscrivant dans une enveloppe oblongue dont la grande dimension (10) s'étend horizontalement et la petite dimension (11) verticalement ; des supports (3) pourvus d'un logement (12) de réception d'un plot (9) respectif ; ledit logement présente un orifice (13) d'introduction dudit plot, ledit orifice étant délimité par deux parois (14) parallèles écartées l'une de l'autre selon un écart (22) inférieur à ladite grande dimension et supérieur ou égal à ladite petite dimension, ledit orifice étant ouvert vers l'arrière et vers le haut, de manière à pouvoir recevoir en coulissement ledit plot en configuration inclinée lors du montage desdits embouts sur les supports, ledit orifice débouchant sur une zone de réception (15) dudit plot, ladite zone étant agencée pour permettre une rotation dudit plot jusqu'à une configuration non inclinée où ledit plot est bloqué en coulissement vers ledit orifice.

## Description

L'invention concerne un système de recouvrement d'un compartiment à bagages de véhicule automobile et un cache bagages d'un tel système.

Il est connu de réaliser un système de recouvrement d'un compartiment à bagages de véhicule automobile, ledit système comprenant un cache bagages et deux supports latéraux solidaires dudit compartiment, ledit cache bagages comprenant :
- un rideau de masquage des bagages actionnable entre une configuration déployée et une configuration escamotée,
- un arbre d'enroulement, selon un axe transversal, dudit rideau en configuration escamotée, ledit arbre étant solidaire d'un bord avant dudit rideau,
- deux embouts latéraux sur lesquels sont respectivement montés en rotation les extrémités dudit arbre,
lesdits embouts étant agencés pour pouvoir être montés dans des logements respectifs prévus sur lesdits supports.

Il est connu, notamment du document EP-1 655 175, de donner aux embouts une géométrie telle qu'ils sont introduits en position inclinée dans les logements puis actionnés en rotation pour pouvoir se bloquer dans lesdits logements.

On assure ainsi un montage/démontage et un blocage/déblocage aisé du cache bagages sur les supports, ceci par rotation dudit cache bagages.

Dans les réalisations connues, la géométrie définie pour assurer la fonction de blocage est complexe et s'applique à la surface périphérique des embouts qui, de ce fait, présentent une esthétique dégradée.

En outre, les embouts connus peuvent occasionner, du fait de leur géométrie complexe, un jeu entre le cache bagages et les dossiers de sièges arrières, ledit cache bagages n'assurant alors qu'imparfaitement sa fonction de cache.

Enfin, les embouts connus requièrent un effort important d'emboîtement lors de leur montage sur les supports.

L'invention a pour but de pallier ces inconvénients.

A cet effet, et selon un premier aspect, l'invention propose un système de recouvrement d'un compartiment à bagages de véhicule automobile, ledit système comprenant un cache bagages et deux supports latéraux solidaires dudit compartiment, ledit cache bagages comprenant :
- un rideau de masquage des bagages actionnable entre une configuration déployée et une configuration escamotée,
- un arbre d'enroulement, selon un axe transversal, dudit rideau en configuration escamotée, ledit arbre étant solidaire d'un bord avant dudit rideau,
- deux embouts latéraux sur lesquels sont respectivement montées en rotation les extrémités dudit arbre,
ledit système présentant les caractéristiques suivantes :
- lesdits embouts sont pourvus d'un plot de montage respectif, ledit plot saillant latéralement, ledit plot présentant une section verticale longitudinale s'inscrivant dans une enveloppe oblongue dont la grande dimension s'étend horizontalement et la petite dimension verticalement,
- lesdits supports sont pourvus d'un logement de réception d'un plot respectif,
- ledit logement présente un orifice d'introduction dudit plot, ledit orifice étant délimité par deux parois parallèles écartées l'une de l'autre selon un écart inférieur à ladite grande dimension et supérieur ou égal à ladite petite dimension, ledit orifice étant ouvert vers l'arrière et vers le haut, de manière à pouvoir recevoir en coulissement ledit plot en configuration inclinée lors du montage desdits embouts sur lesdits supports, ledit orifice débouchant sur une zone de réception dudit plot, ladite zone étant agencée pour permettre une rotation dudit plot jusqu'à une configuration non inclinée où ledit plot est bloqué en coulissement vers ledit orifice, de façon à permettre le maintien desdits embouts sur lesdits supports.

Dans cette description, les termes de positionnement dans l'espace (haut, bas, longitudinal, transversal, latéral, avant, arrière, vertical, horizontal, dessus,...) sont pris en référence au système disposé en situation d'utilisation dans le véhicule.

Lorsqu'il est dit que la grande dimension de l'enveloppe s'étend horizontalement et la petite dimension verticalement, on se réfère à la configuration non inclinée du plot permettant le maintien des embouts sur les supports.

Avec l'agencement proposé, les embouts présentent une esthétique optimisée, leur géométrie n'étant pas dictée par une fonction de blocage, puisque la géométrie nécessaire à la fonction de blocage est disposée sur un plot indépendant.

En outre, on supprime le jeu entre le cache bagages et les dossiers de sièges arrière, la géométrie des embouts pouvant être adaptée à cet effet sans interférence sur la fonction de blocage.

Enfin, l'effort à fournir lors du montage des embouts sur les supports est insignifiant, ce qui facilite le montage/démontage du cache bagages par l'utilisateur.

Selon un deuxième aspect, l'invention propose un cache bagages d'un tel système.

D'autres particularités et avantages de l'invention apparaîtront dans la description qui suit, faite en référence aux figures jointes dans lesquelles :

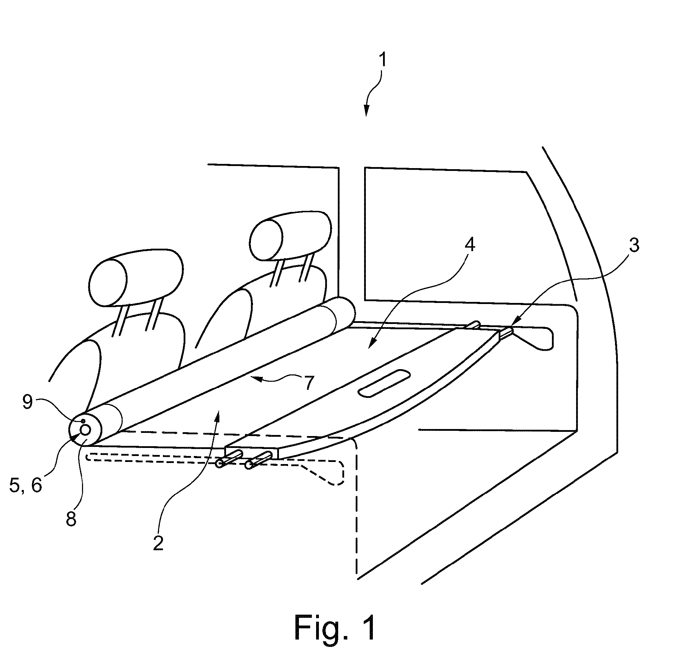

- la figure 1 est une vue d'ensemble schématique en perspective d'un système selon une réalisation,

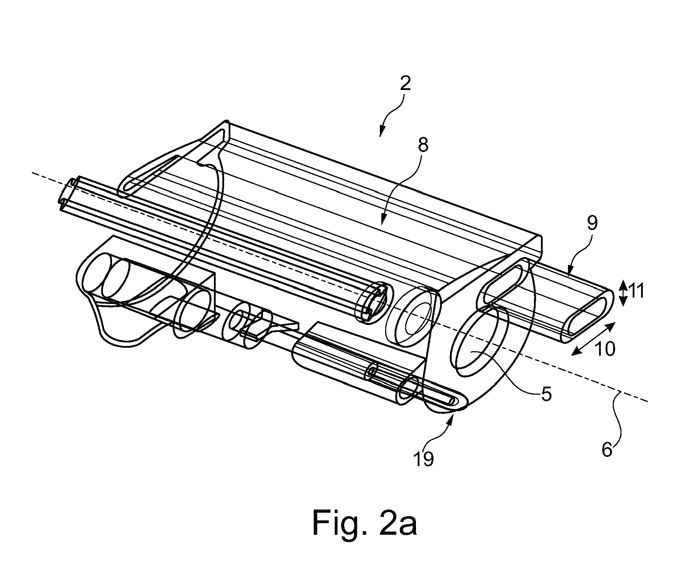

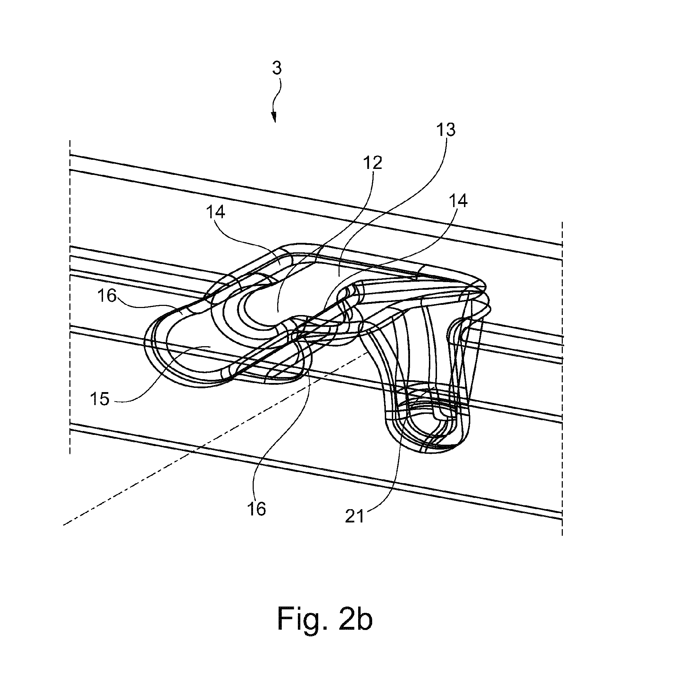

- les figures 2 sont des vues schématiques partielles d'un cache bagages (2a) et d'un support (2b) du système de la figure 1,

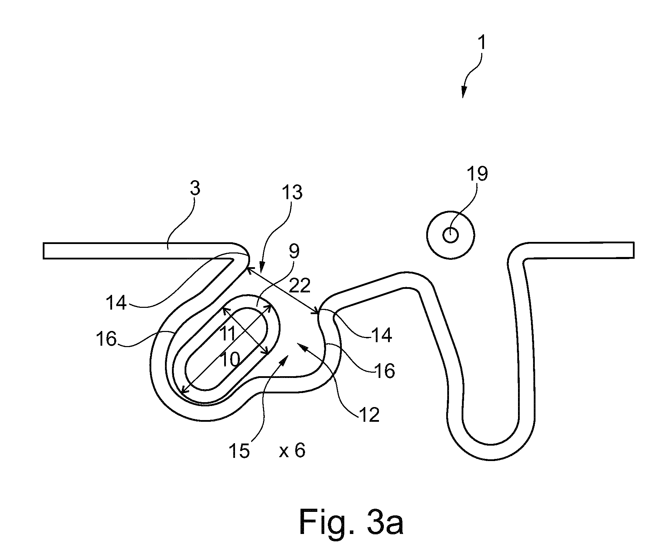

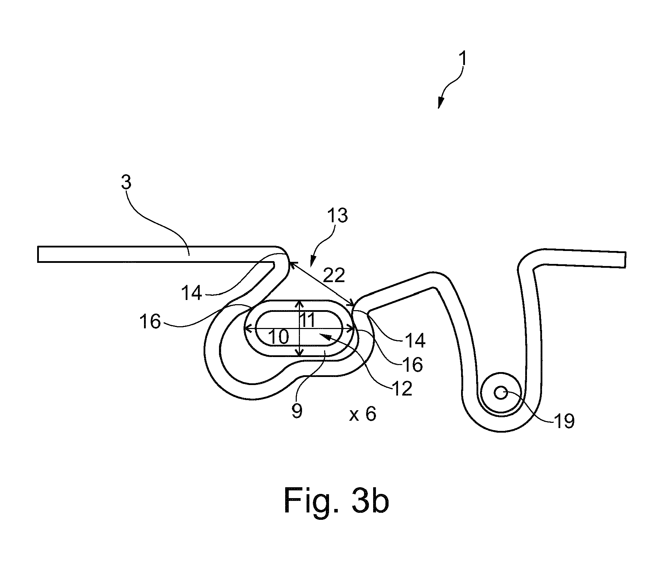

- les figures 3 sont des vues en coupe d'une partie latérale du système de la figure 1, un embout étant représenté en cours de montage (3a) sur le support correspondant et une fois monté (3b)
- la figure 4 est une vue schématique latérale partielle d'un système selon une variante de réalisation, un plot étant représenté en configuration non inclinée dans son logement (a), en configuration verticale de coulissement dans la gorge (b) et en configuration non inclinée dans son espace de rangement ;
- la figure 5 est une vue schématique par l'arrière du système selon la variante de la figure 4, le cache bagages étant en cours de rangement, les embouts étant décalés verticalement.

En référence aux figures, on décrit un système 1 de recouvrement d'un compartiment à bagages de véhicule automobile, ledit système comprenant un cache bagages 2 et deux supports 3 latéraux solidaires dudit compartiment, ledit cache bagages comprenant :
- un rideau 4 de masquage des bagages actionnable entre une configuration déployée et une configuration escamotée,
- un arbre 5 d'enroulement, selon un axe 6 transversal, dudit rideau en configuration escamotée, ledit arbre étant solidaire d'un bord avant 7 dudit rideau,
- deux embouts 8 latéraux sur lesquels sont respectivement montées en rotation les extrémités dudit arbre,
ledit système présentant les caractéristiques suivantes :
- lesdits embouts sont pourvus d'un plot 9 de montage respectif, notamment issu de matière par moulage, ledit plot saillant latéralement, ledit plot présentant une section verticale longitudinale s'inscrivant dans une enveloppe oblongue dont la grande dimension 10 s'étend horizontalement et la petite dimension 11 verticalement,
- lesdits supports sont pourvus d'un logement 12 de réception d'un plot 9 respectif,
- ledit logement présente un orifice 13 d'introduction dudit plot, ledit orifice étant délimité par deux parois 14 parallèles écartées l'une de l'autre selon un écart 22 inférieur à ladite grande dimension et supérieur ou égal à ladite petite dimension, ledit orifice étant ouvert vers l'arrière et vers le haut, de manière à pouvoir recevoir en coulissement ledit plot en configuration inclinée lors du montage desdits embouts sur lesdits supports, ledit orifice débouchant sur une zone de réception 15 dudit plot,
   ladite zone étant agencée pour permettre une rotation dudit plot jusqu'à une configuration non inclinée où ledit plot est bloqué en coulissement vers ledit orifice, de façon à permettre le maintien desdits embouts sur lesdits supports.

Selon la réalisation représentée, la zone de réception 15 présente deux surfaces 16 diamétralement opposées et agencées pour bloquer le plot 9 en déplacement longitudinal lorsqu'il est en configuration non inclinée.

Selon la réalisation représentée, le plot 9 est disposé au dessus du centre de gravité du cache bagages 2 lorsque le rideau 4 est en configuration escamotée, de sorte que la rotation des plots 9 vers leur configuration non inclinée se fasse sous l'effet du poids dudit cache bagages.

Selon la réalisation représentée, les plots 9 présentent une section en rectangle dont les petits côtés sont conformés en arc de cercle.

Selon une variante non représentée, les plots 9 présentent une section ovale.

Selon la réalisation représentée, la configuration inclinée correspond à un angle avec l'horizontale compris entre 30 et 60°, étant notamment de l'ordre de 45°.

Selon la réalisation représentée, les embouts 8 sont pourvus d'un doigt 19 transversal rétractable respectif, ledit doigt étant actionné en configuration saillante par un ressort, non visible sur les figures, ledit doigt se mettant en appui contre le support 3 correspondant lors du montage du cache bagages 2.

Un tel agencement permet d'assurer un centrage transversal du cache bagages 2 une fois monté, et ceci malgré les dispersions dimensionnelles qui peuvent se présenter dans sa dimension transversale ou dans l'écart entre les supports 3.

Selon la réalisation représentée, chaque doigt 19 est disposé en arrière du plot 9 correspondant, de manière à entrer en appui avec le support 3 correspondant à l'issue de la rotation effectuée sur les plots 9 pour les amener en configuration non inclinée, ledit support comprenant un bossage 21 de retenue dudit doigt permettant de maintenir ledit plot dans ladite configuration.

Un assure ainsi un blocage complémentaire des embouts 8 sur les supports 3 par rapport à celui déjà assuré par la rotation desdits embouts.

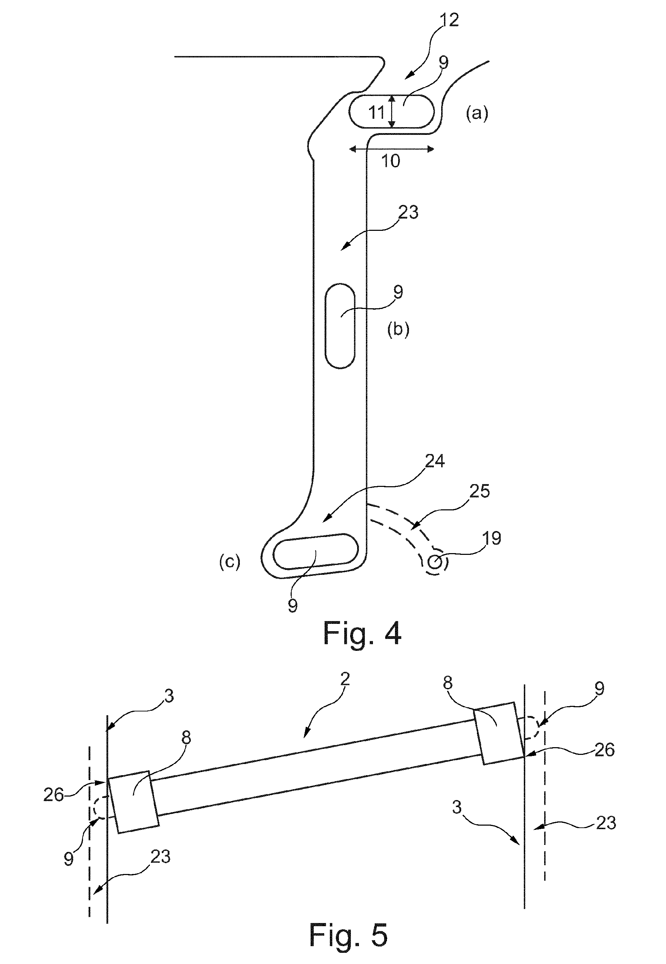

Selon la variante de réalisation représentée en figure 4, les logements 12 se prolongent vers le bas par une gorge 23 sensiblement verticale de guidage d'un plot 9, ladite gorge présentant une largeur supérieure ou égale à la petite dimension 11 et inférieure à la grande dimension 10 dudit plot, de manière à permettre son coulissement dans ladite gorge vers le bas pour ranger le cache bagages 2 vers le bas - et notamment au fond - du compartiment à bagages, ledit plot adoptant lors de son coulissement une configuration verticale où ladite grande dimension est orientée sensiblement verticalement, ladite gorge débouchant en bas du support 3 correspondant sur un espace 24 de rangement dudit plot.

Un tel agencement permet un rangement très aisé du cache bagages 2 lorsqu'il n'est pas utilisé, ceci en réalisant une rotation permettant d'engager les plots 9 dans les gorges 23 correspondantes et en laissant ledit cache bagages se déplacer vers le bas du fait de son propre poids.

Un tel agencement permet donc de ne pas avoir à extraire les plots 9 de leurs logements 12 pour les amener dans leurs espaces de réception 24.

En d'autre termes, le rangement du cache bagages 2 ne requiert pas son démontage des supports 3, le rangement dudit cache bagages se faisant par simple rotation.

De façon non représentée, il peut être prévu que le cache bagages 2 une fois rangé s'inscrive dans un volume de rangement situé sous le plancher du compartiment à bagages, ceci permettant de dégager de façon optimale ledit compartiment lorsque ledit cache bagages n'est pas utilisé.

Selon la réalisation représentée, l'espace 24 est agencé pour permettre une rotation du plot 9 jusqu'en configuration non inclinée où il est bloqué en coulissement vers la gorge 23, de façon à le maintenir dans ledit espace, son déplacement vers le haut requérant une manoeuvre de rotation pour mise dudit plot en configuration verticale, suivie d'une traction vers le haut.

Comme représenté schématiquement, les supports 3 comprennent ici chacun une gorge annexe 25, disposée à proximité de l'espace 24, de réception d'un doigt 19 lorsque le plot 9 correspondant est mis en configuration non inclinée dans ledit espace.

Comme représenté en figure 5, il peut être prévu que les embouts 8 présentent des zones 26 de butée latérales agencées de manière à prendre appui contre les supports 3 lorsque, le cache bagages 2 étant en déplacement vers le bas ou vers le haut, lesdits embouts sont décalés verticalement, les plots 9 saillant latéralement de façon suffisante pour rester engagés dans les gorges 23 lorsqu'est réalisé ledit appui.

On assure ainsi que les plots 9 ne sortent pas de leurs gorges 23 lors d'une « mise en crabe » accidentelle du cache bagages 2 lors de sa manipulation en vue de son rangement, ou bien de son retrait en vue d'une utilisation.

On décrit à présent un cache bagages 2 d'un tel système 1, ledit cache bagages comprenant :
- un rideau 4 de masquage des bagages actionnable entre une configuration déployée et une configuration escamotée,
- un arbre 5 d'enroulement, selon un axe 6 transversal, dudit rideau en configuration escamotée, ledit arbre étant solidaire d'un bord avant 7 dudit rideau,
- deux embouts 8 latéraux sur lesquels sont respectivement montées en rotation les extrémités dudit arbre, lesdits embouts étant pourvus d'un plot 9 de montage respectif, ledit plot saillant latéralement, ledit plot présentant une section verticale longitudinale s'inscrivant dans une enveloppe oblongue dont la grande dimension 10 s'étend horizontalement et la petite dimension 11 verticalement,

Selon la réalisation représentée, les embouts 8 du cache bagages 2 sont pourvus d'un doigt 19 transversal rétractable respectif, ledit doigt étant actionné en configuration saillante par un ressort.

## Revendications

1. Système (1) de recouvrement d'un compartiment à bagages de véhicule automobile, ledit système comprenant un cache bagages (2) et deux supports (3) latéraux solidaires dudit compartiment, ledit cache bagages comprenant :
• un rideau (4) de masquage des bagages actionnable entre une configuration déployée et une configuration escamotée,
• un arbre (5) d'enroulement, selon un axe (6) transversal, dudit rideau en configuration escamotée, ledit arbre étant solidaire d'un bord avant (7) dudit rideau,
• deux embouts (8) latéraux sur lesquels sont respectivement montées en rotation les extrémités dudit arbre,
ledit système étant **caractérisé en ce que** :
• lesdits embouts sont pourvus d'un plot de montage (9) respectif, ledit plot saillant latéralement, ledit plot présentant une section verticale longitudinale s'inscrivant dans une enveloppe oblongue dont la grande dimension (10) s'étend horizontalement et la petite dimension (11) verticalement,
• lesdits supports sont pourvus d'un logement (12) de réception d'un plot (9) respectif,
• ledit logement présente un orifice (13) d'introduction dudit plot, ledit orifice étant délimité par deux parois (14) parallèles écartées l'une de l'autre selon un écart (22) inférieur à ladite grande dimension et supérieur ou égal à ladite petite dimension, ledit orifice étant ouvert vers l'arrière et vers le haut, de manière à pouvoir recevoir en coulissement ledit plot en configuration inclinée lors du montage desdits embouts sur lesdits supports, ledit orifice débouchant sur une zone de réception (15) dudit plot, ladite zone étant agencée pour permettre une rotation dudit plot jusqu'à une configuration non inclinée où ledit plot est bloqué en coulissement vers ledit orifice, de façon à permettre le maintien desdits embouts sur lesdits supports.

2. Système selon la revendication 1, **caractérisé en ce que** la zone de réception (15) présente deux surfaces (16) diamétralement opposées et agencées pour bloquer le plot (9) en déplacement longitudinal lorsqu'il est en configuration non inclinée.

3. Système selon la revendication 1 ou 2, **caractérisé en ce que** le plot (9) est disposé au dessus du centre de gravité du cache bagages (2) lorsque le rideau (4) est en configuration escamotée, de sorte que la rotation des plots (9) vers leur configuration non inclinée se fasse sous l'effet du poids dudit cache bagages.

4. Système selon l'une quelconque des revendications 1 à 3, **caractérisé en ce que** les embouts (8) sont pourvus d'un doigt (19) transversal rétractable respectif, ledit doigt étant actionné en configuration saillante par un ressort, ledit doigt se mettant en appui contre le support (3) correspondant lors du montage du cache bagages (2).

5. Système selon la revendication 4, **caractérisé en ce que** chaque doigt (19) est disposé en arrière du plot (9) correspondant, de manière à entrer en appui avec le support (3) correspondant à l'issue de la rotation effectuée sur les plots (9) pour les amener en configuration non inclinée, ledit support comprenant un bossage (21) de retenue dudit doigt permettant de maintenir ledit plot dans ladite configuration.

6. Système selon l'une quelconque des revendications 1 à 5, **caractérisé en ce que** les logements (12) se prolongent vers le bas par une gorge (23) sensiblement verticale de guidage d'un plot (9), ladite gorge présentant une largeur supérieure ou égale à la petite dimension (11) et inférieure à la grande dimension (10) dudit plot, de manière à permettre son coulissement dans ladite gorge vers le bas pour ranger le cache bagages (2) vers le bas du compartiment à bagages, ledit plot adoptant lors de son coulissement une configuration verticale où ladite grande dimension est orientée sensiblement verticalement, ladite gorge débouchant en bas du support (3) correspondant sur un espace (24) de réception dudit plot.

7. Système selon la revendication 6, **caractérisé en ce que** l'espace (24) est agencé pour permettre une rotation du plot (9) jusqu'en configuration non inclinée où il est bloqué en coulissement vers la gorge (23), de façon à le maintenir dans ledit espace.

8. Système selon la revendication 7, quand elle dépend de la revendication 4, **caractérisé en ce que** les supports (3) comprennent chacun une gorge annexe (25), disposée à proximité de l'espace (24), de réception d'un doigt (19) lorsque le plot (9) correspondant est mis en configuration non inclinée dans ledit espace.

9. Système selon l'une quelconque des revendications 6 à 8, caractérisé en ce les embouts (8) présentent des zones (26) de butée latérales agencées de manière à prendre appui contre les supports (3) lorsque, le cache bagages (2) étant en déplacement vers le bas ou vers le haut, lesdits embouts sont décalés verticalement, les plots (9) saillant latéralement de façon suffisante pour rester engagés dans les gorges (23) lorsqu'est réalisé ledit appui.

10. Cache bagages (2) d'un système (1) selon l'une quelconque des revendications 1 à 9, ledit cache bagages comprenant :
• un rideau (4) de masquage des bagages actionnable entre une configuration déployée et une configuration escamotée,
• un arbre (5) d'enroulement, selon un axe (6) transversal, dudit rideau en configuration escamotée, ledit arbre étant solidaire d'un bord avant (7) dudit rideau,
• deux embouts (8) latéraux sur lesquels sont respectivement montées en rotation les extrémités dudit arbre, lesdits embouts étant pourvus d'un plot (9) de montage respectif, ledit plot saillant latéralement, ledit plot présentant une section verticale longitudinale s'inscrivant dans une enveloppe oblongue dont la grande dimension (10) s'étend horizontalement et la petite dimension (11) verticalement,
